Europäisches Patentamt

European Patent Office

Office européen des brevets

(11) Publication number: **0 094 989**
**A1**

## (12) EUROPEAN PATENT APPLICATION

(21) Application number: **82200640.9**

(22) Date of filing: **25.05.82**

(51) Int. Cl.³: **F 24 D 17/00**
**F 24 D 19/10, F 24 D 3/00**
**F 24 D 3/08, F 24 H 9/20**

(43) Date of publication of application:
**30.11.83 Bulletin 83/48**

(84) Designated Contracting States:
**AT BE CH DE FR GB IT LI LU NL SE**

(71) Applicant: **AGPO / ENERTEC B.V.**
**Konijnenberg 24**
**NL-4825 BD Breda(NL)**

(72) Inventor: **Van der Linden, Peter Joh. M.**
**19 Pelsakker**
**NL-4834 AG Breda(NL)**

(74) Representative: **Hoorweg, Petrus Nicolaas et al,**
**OCTROOIBUREAU ARNOLD & SIEDSMA Sweelinckplein**
**1**
**NL-2517 GK The Hague(NL)**

(54) Device for supplying hot water, heat-supplying system and built-in unit comprising such a device.

㉗ A device for supplying hot water comprising a heat exchanger (1) having a primary section (2) traversed by a hot fluid, an inlet (3) and an outlet conduit (4) and a secondary section (5) traversed by the water to be heated, wherein a communication conduit (11) is arranged between the inlet (3) and outlet conduit (4) of the primary section (2), whilst the inlet conduit (3) downstream of the junction with the communication duct (11) includes a circulation pump (13) and, respectively, the outlet conduit (4) includes a controllable valve (14) downstream of the branch point of the communication duct (11), whereby the fluctuations of the temperature level of the hot fluid do not affect the final temperature of the tap water at the consumer place.

Croydon Printing Company Ltd.

EP 0 094 989 A1

Device for supplying hot water, heat-supplying system and built-in unit comprising such a device
_____

The invention relates to a device for supplying hot water comprising a heat-exchanger having a primary section traversed by a hot fluid, an inlet and an outlet conduit and a secondary section traversed by the water to be heated.

A device of the kind set forth in the preamble is employed, for example, in city heating systems in which a supply conduit and a return conduit for a hot fluid from a central heat source are used, said conduits extending towards the various consumer places.

The invention has for its object to provide such a heat supplying device that the fluctuations of the temperature level of the hot fluid do not affect the final temperature of the tap water at the consumer place. This tap water may be used in bathrooms or kitchens, where temperature variations may be troublesome and even hazardous.

The device according to the invention is distinguished in that a communication conduit is arranged between the inlet and outlet conduit of the primary section, whilst the inlet conduit downstream of the junction with the communication duct includes a circulation pump and, respectively, the outlet conduit includes a controllable valve downstreams of the branch point of the communication duct.

Owing to the circulation pump a maximum flow through the primary section of the heat exchanger is ensured, whilst the temperature is maintained at the desired, constant level by controlling the valve in the outlet conduit, a portion of the water from the primary section being supplied through the communication duct to the pump when said valve is choked.

It is preferred to govern the control-valve in the outlet conduit by means of a thermostat, which accurately responds to temperature fluctuations in the system. In order to reduce the reaction time the thermostat is preferably included in the outlet duct downstream of the primary section.

In order to avoid unnecessary circulation through the primary section the cold water inlet duct of the secondary section includes a flow switch which controls the circulation pump of the primary section. Therefore, as soon as hot water is required, the flow switch actuates the circulation pump.

The invention furthermore relates to a heat supplying system comprising the device described above in which one or more additional heat exchangers with the associated control-members are connected with the inlet and outlet conduits and parallel to the primary section of the heat exchanger, for example, for heating rooms.

In the heat supplying system the above described device operates to full satisfaction because by switching on or off room heating elements the temperature of the fluid through the primary section may vary.

The invention furthermore relates to a built-in unit for houses and utility buildings comprising a device of the kind set forth above and the associated control-apparatus for heating rooms.

The invention will be described more fully with reference to the figures showing a control-diagram.

Referring to the diagram refrence numeral 1 designates the heat exchanger which is proved with a primary section 2 with inlet conduit 3 and outlet conduit 4. With the secondary section 5 are connected the cold water inlet conduit 6 and the conduit 7 to the tapping places 8 and 9. If necessary, a flow inhibitor 10 may be provided for the tap point 8 for limiting the flow rate to tap point 8.

According to the invention a communication duct 11 with a constriction 12 is arranged between the inlet conduit 3 and the outlet conduit 4, which constriction may be formed by a connecting duct 11 having a passage smaller than that of the conduits 3 and 4, whilst as an alternative an exchangeable construction may be used.

Downstream of the junction between conduits 3 and 11 is arranged a circulation pump 13, whilst a controllable valve 14 is arranged downstream of the branch point of the duct 12 and conduit 4. The controllable valve is actuated by a thermostat 15, the sensor of which is disposed in the conduit 4 downstream of the primary section 2.

Reference numeral 16 designates a tap cock for emptying the primary section, when desired.

Finally the cold water supply duct 6 includes a flow switch 17, which controls the pump 13.

The device operates as follows:

As soon as at one of the tap points water is required a flow is produced in the secondary section of the heat exchanger, said flow being monitored by switch 17, which actuates the pump 13. Therefore, a flow of hot fluid is produced in the conduits 3 and 4 through the primary section of the heat exchanger. It will transfer the heat to the secondary section so that the cold water in conduit 6 is heated and conducted towards the tap points 8 and 9.

In the event of too high a temperature level of the hot fluid in the conduit 3 the thermostat 15 will cause the valve 14 to close so that a portion of the fluid passing through the primary section is returned via the communication duct to the pump 13. Therefore, at the junction between conduits 11 and 3 hot fluid and comparatively colder fluid already used are mixed. The teperature level in thus lowered so that a constant heat transfer from the primary section to the secondary section is ensured.

In the event of too low a temperature level the control-valve 14 will open so that recirculation through communication duct 11 is reduced.

Parallel to the device described above one or more additional heat exchangers 20 can be connected with the inlet and outlet conduits, the control-system of said exchangers being formed by a circulation pump 21, a closing member 22 in the inlet conduit, a closing member 23 in the outlet conduit and by a non-return valve 24 between the inlet and outlet conduits. The inlet conduit includes a master cock 25.

According to the invention the unit circumscribed by the broken line 25 can be supplied as an entity to the building market.

The invention is not limited to the embodiment described above, since the thermostat 15 may, as an alternative, be provided with a sensor arranged in the inlet conduit 3.

. ———

WHAT IS CLAIMED IS:

1. A device for supplying hot water comprising a heat exchanger having a primary section traversed by a hot fluid with an inlet conduit and an outlet conduit and s secondary section traversed by the water to be heated characterized in that a communication duct is arranged between the inlet and outlet conduits of the primary section and a circulation pump is included in the inlet conduit downstream of the junction with the communication duct and a controllable valve is included in the outlet conduit downstream of the branch point of the communication duct.

2. A device as claimed in claim 1 characterized in that the controllable valve is governed by a thermostat.

3. A device as claimed in claims 1 and 2 characterized in that the thermostat is included in the outlet conduit.

4. A device as claimed in claims 1 to 3 characterized in that the pump is controlled by a flow switch in the cold water inlet conduit of the secondary section of the heat exchanger.

5. A heat supplying system comprising a device as claimed in anyone of the preceding claims, wherein one or more additional heat exchangers with the associated control-apparatus are connected with the inlet and outlet conduits and parallel to the primary section of the heat exchanger for example, for heating rooms.

6. A built-in unit for houses and utility buildings consisting of a device as claimed in anyone of claims 1 to 3 and the associated control apparatus for heating rooms.

----

European Patent
Office

**EUROPEAN SEARCH REPORT**

**0094989**
Application number

EP 82 20 0640

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | F 24 D 17/00 |
| X | EP-A-0 015 884 (AB CTC) <br> * complete document * | 1-4,6 | F 24 D 19/10 <br> F 24 D 3/00 <br> F 24 D 3/08 <br> F 24 H 9/20 |
| | --- | | |
| X | DE-A-2 517 674 (GRAS et al.) <br> * page 9, paragraph 1-page 10, paragraph 2 * | 5,6 | |
| | --- | | |
| A | DE-A-2 231 231 (GÖSSI) <br> * figure * | 1 | |
| | --- | | |
| A | FR-A-1 514 142 (L'INDUSTRIELLE DE CHAUFFAGE S.A.) <br> * figure * | 1 | |
| | ----- | | |
| | | | **TECHNICAL FIELDS SEARCHED (Int. Cl. ³)** |
| | | | F 24 D 3/00 <br> F 24 D 17/00 <br> F 24 D 19/00 <br> F 24 H 9/00 |

The present search report has been drawn up for all claims

| Place of search <br> BERLIN | Date of completion of the search <br> 07-01-1983 | Examiner <br> PIEPER C |
|---|---|---|

CATEGORY OF CITED DOCUMENTS

X : particularly relevant if taken alone
Y : particularly relevant if combined with another
document of the same category
A : technological background
O : non-written disclosure
P : intermediate document

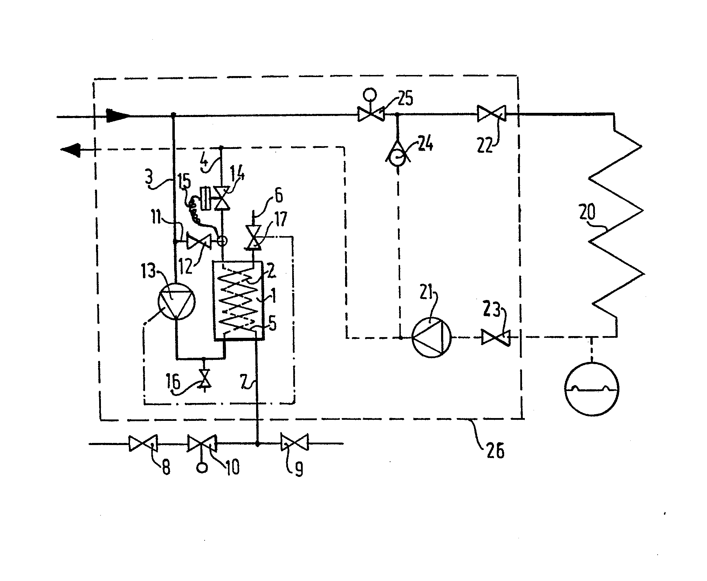

T : theory or principle underlying the invention
E : earlier patent document, but published on, or
after the filing date
D : document cited in the application
L : document cited for other reasons

& : member of the same patent family, corresponding
document

EPO Form 1503. 03.82